# EUROPÄISCHE PATENTANMELDUNG

(11) **EP 1 732 282 A1**
(43) Veröffentlichungstag der Anmeldung: **13.12.2006**
(21) Anmeldenummer: 05253600.0
(22) Anmeldetag: 10.06.2005
(51) Int. Cl.: H04L 29/06, H04L 12/18

(54) **Verfahren zur Verarbeitung von Multimediadaten**

(71) Anmelder: SIEMENS AKTIENGESELLSCHAFT, 80333 München (DE)
(72) Erfinder: Diana, Clare Edwin, Southampton SO15 4HU (GB); Mitjana, Enric, 1170 Brüssel (DE)

(57) **Zusammenfassung**

Die vorliegende Erfindung beschreibt ein Verfahren zur Verarbeitung von Multimediadaten, wobei erste und zweite Multimediadaten (166) (168) (266) (268) (370) (372) (376) (378) zumindest teilweise zeitgleich vom einem Sender (40, 140) an einen Empfänger (20), (120), (122) gesendet werden, wobei weiterhin den ersten und zweiten Multimediadaten (166) (168) (266) (268) (370) (372) (376) (378) jeweils eine erste und zweite Nutzungsinformation (362)(366) und/oder eine gemeinsame Nutzungsinformation (162) (262) zugeordnet ist und weiterhin der Empfänger (20) (120) (220) die ersten und zweiten Multimediadaten (166) (168) (266) (268) (370) (372) (376) (378) in Abhängigkeit von der ersten und zweiten Nutzungsinformation (362)(366) und/oder der gemeinsamen Nutzungsinformation (162) (262) verarbeitet und/oder empfängt.

## Beschreibung

Die vorliegende Erfindung betrifft ein Verfahren zur Verarbeitung von Multimediadaten wobei erste und zweite Multimediadaten zumindest teilweise zeitgleich von einem Sender an einen Empfänger gesendet werden.

Derartige Verfahren sind aus dem Stand der Technik bekannt. So ist beispielsweise für die dritte Mobilfunkgeneration ein "Multimedia Broadcast/Multicast Service" (MBMS) vorgesehen, welcher in dem von der 3GPP herausgegebenen Standart TS 23.246 V6.6.0 und den darin zitierten Dokumenten definiert ist. Dieser MBMS gestattet die effiziente Übertragung von Multimediadaten an mehrere Empfänger. Beim bislang definierten MBMS-Dienst kann es häufig vorkommen, dass eine Vielzahl unterschiedlicher Multimediadaten parallel gesendet werden. Dies kann zu Problemen bei der Ausgabe der Multimediadaten an einem Endgerät führen, wenn die technischen Spezifikationen des Endgerätes nicht ausreichen um alle angebotenen Informationen und Daten auch entsprechend verarbeiten zu können. Dies kann beispielsweise dazu führen, dass überhaupt keine der Daten sinnvoll empfangen oder dargestellt werden können oder dies nur mit Störungen geschieht. Dies ist insbesondere bei solchen Diensten problematisch, bei welchen der Empfänger für die Lieferungen des Dienstes bezahlt und bei welchen z.B. unterschiedliche Multimediadaten kombiniert werden.

Daher ist es eine Aufgabe der vorliegenden Erfindung ein Verfahren zur Verarbeitung von Multimediadaten zur Verfügung zu stellen, welche eine verbesserte Qualität beim Empfang von parallel übertragenen Multimediadaten ermöglicht.

Diese Aufgabe wird gelöst durch ein Verfahren zur Verarbeitung von Multimediadaten, wobei erste und zweite Multimediadaten zumindest teilweise zeitgleich von einem Sender an einen Empfänger gesendet werden, und wobei weiterhin den ersten und zweiten Multimediadaten jeweils eine erste und zweite Nutzungsinformation und/oder eine gemeinsame Nutzungsinformation zugeordnet ist und der Empfänger die ersten und zweiten Multimediadaten in Abhängigkeit von der ersten und zweiten Nutzungsinformation und/oder der gemeinsamen Nutzungsinformation verarbeitet und/oder empfängt.

Durch die Tatsache, dass den ersten und zweiten Multimediadaten jeweils eine erste und zweite Nutzungsinformation und/oder eine gemeinsame Nutzungsinformation zugeordnet ist und dass der Empfänger diese weiterhin auswertet, ist es möglich, dass der Empfänger parallel ankommende erste und zweite Multimediadaten besser einordnen und/oder verarbeiten kann. So kann der Empfänger den Nutzungsinformationen beispielsweise Informationen über die Art und die Weiterverarbeitung der Multimediadaten entnehmen, so dass er einschätzen kann, ob er diese Multimediadaten parallel zu anderen Multimediadaten empfangen kann. Weiterhin kann der Empfänger den Nutzungsinformationen beispielsweise entnehmen, ob zwei parallel ankommende Multimediadaten thematisch zueinander gehören oder nicht. Sollte dann der Fall vorliegen, dass der Empfänger nicht beide Datenströme parallel bearbeiten kann, vereinfacht die Nutzungsinformation dem Empfänger die Entscheidung, wie er mit den ankommenden Daten weiter verfährt, ob er zum Beispiel nur einen der Datenströme empfängt oder ob er keinen der Datenströme empfängt. So kann der Empfänger beispielsweise im Fall von zusammengehörenden Multimediadaten diese dann gar nicht annehmen währende er bei nicht zusammengehörenden Multimediadaten ausgewählte davon empfangen und darstellen kann.

Multimediadaten können beispielsweise Bild-, Ton-, Video- oder Textdaten oder -dateien sein oder auch eine beliebige Kombination der vorgenannten Daten. Die Multimediadaten können beispielsweise als relativ kurze, abgeschlossene Dateien, wie beispielsweise Video-, Ton-, Bild- oder Textdateien, vorliegen. Weiterhin können die Multimediadaten auch als im Wesentlichen kontinuierlicher bzw. zeitlich lang andauernder Datenstrom vorliegen, wie er z.B. bei der Übertragung von Kino- oder Fernsehfilmen oder Fernseherprogrammen angewendet werden kann.

Dass die Multimediadaten zumindest teilweise zeitgleich übertragen werden bedeutet hier, dass bei der Übertragung der ersten und zweiten Multimediadaten ein gewisser Zeitraum existiert, an welchem die Multimediadaten parallel übertragen werden.

Der Sender kann beispielsweise als eine Basisstation (z.B. Node B gemäß dem UMTS Mobilfunkstandard oder vergleichbare Einheiten in anderen Mobilfunknetzen), eine Netzwerk-Steuerungseinheit (z.B. Radio-Network-Controller (RNC) gemäß dem UMTS Mobilfunkstandard oder vergleichbare Einheiten in anderen Mobilfunknetzen) oder eine Mobilstation in einem Mobilfunknetz ausgebildet sein. Weiterhin kann der Sender beispielsweise als Serviceeinrichtung zur Verfügungsstellung von Multimediadaten in einem Telekommunikationsnetz ausgebildet sein. Insbesondere kann dar Sender als "Broadcast-Multicast-Service-Center (BM-SC)" im Sinne des 3GPP-Standards TS 23.246 V6.6.0 Kap. 5.1 in einem Mobilfunknetz ausgebildet sein.

Der Empfänger kann als Telekommunikationsendgerät, beispielsweise als Mobiltelefon oder Festnetztelefon, ausgebildet sein. Mobiltelefone können beispielsweise gemäß dem GSM, dem GPRS, dem UMTS oder auch dem CDMA2000 Standard ausgebildet sein. Der Empfänger kann beispielsweise weiterhin Ausgabeeinheiten zur Ausgabe von Multimediadaten umfassen, wie beispielsweise eine optische Anzeigeeinheit (LCD-Display, Leuchtdiode(n)) oder eine akustische Ausgabeeinheit (Lautsprecher) umfassen.

Dass den ersten und zweiten Multimedia-Daten jeweils eine erste und zweite Nutzungsinformation zugeordnet ist, kann in diesem Zusammenhang beispielsweise bedeuten, dass sowohl den ersten als auch den zweiten Multimediadaten jeweils eine eigene Nutzungsinformation zugeordnet ist. Diese kann unabhängig von den eigentlichen Multimediadaten an den Empfänger übertragen werden oder auch im Zusammenhang mit der konkreten Übertragung der Multimediadaten mit übertragen werden (beispielsweise zu Beginn der Übertragung der Multimediadaten).

Die den ersten und zweiten Multimediadaten zugeordnete gemeinsame Nutzungsinformation kann ebenfalls beispielsweise unabhängig von der eigentlichen Übertragung der Multimediadaten an den Empfänger gesandt werden oder auch im Zusammenhang mit der Übertragung der ersten und/oder zweiten Multimediadaten mit übertragen werden (beispielsweise zu Beginn der Übertragung der Multimediadaten). Nutzungsinformationen können beispielsweise Informationen über die Art der Multimediadaten, die Dauer der Übertragung, den Multimediadaten zugeordnete weitere Multimediadaten, eine Kosteninformation über die Multimediadaten bzw. die Übertragung der Multimediadaten oder ähnliches umfassen. So können innerhalb der Nutzungsinformationen beispielsweise Gruppen von Multimediadaten definiert werden, die zusammengehörende Informationen beinhalten. Dies können beispielsweise ein oder mehrere Bild- und ein oder mehrere Tonkanäle zu einer Video-, Film- oder Fernseheübertragung sein.

Die Begriffe der Verarbeitung und des Empfangs der Multimediadaten im Empfänger werden im Wesentlichen synonym verwendet. Dabei bezieht sich der Empfang beispielsweise im Falle eines Mobilfunkempfängers eher auf den Bereich der sogenannten Basisbandverarbeitung, d.h. der Decodierung des empfangenen Signals in ein für die implementierten Applikationen lesbares Format. Die Verarbeitung beschreibt dagegen eher die Weiterverarbeitung der empfangenen Daten innerhalb einer Applikation, beispielsweise zur Bild- oder Tonausgabe. Im Sinne der vorliegenden Anmeldung sollen die Begriffe allerdings synonym gelten, so dass sich der Empfang auch auf die Weiterverarbeitung der Daten innerhalb einer Applikation und die Verarbeitung auch auf die Decodierung eines vom Telekommunikationsnetz empfangenen Signals erstreckt.

Die Formulierung, dass die Multimediadaten in Abhängigkeit der jeweiligen Nutzungsinformationen verarbeitetet und/oder empfangen werden, kann beispielsweise so verstanden werden, dass der Empfänger die Möglichkeit hat, anhand der in den Nutzungsinformationen mitgeteilten Daten zu entscheiden, ob, wie, in welchen Fällen und/oder wann er welche Multimediadaten empfangen und/oder verarbeiten kann oder möchte. Dabei kann weiterhin vorgesehen sein, dass das Verhalten des Empfängers von einem Benutzer voreingestellt oder voreinstellbar ist. Weiterhin kann das Verhalten des Empfängers diesbezüglich im Empfänger voreingestellt oder vom Telekommunikationsnetz, insbesondere dem Sender, vorgegeben werden. Weiterhin kann die Formulierung, dass die Multimediadaten im Abhängigkeit von der Nutzungsinformation verarbeitet und/oder empfangen werden auch bedeuten, dass ein den Empfänger bedienender Benutzer letztendlich die Auswahl darüber trifft, wie mit den ankommenden Multimediadaten verfahren wird oder werden soll. So können dem Benutzer beispielsweise verschiedene Verfahrensmöglichkeiten angeboten werden und dieser wählt beispielsweise über eine Tastatur des Empfängers eine gewünschte Option aus.

In einer Ausgestaltung der Erfindung kann nach einer Beendigung der Übertragung der ersten und/oder zweiten Multimediadaten vorgesehen sein, diese jeweils erneut zu übertragen-Dies kann z.B. in Fällen vorgesehen sein, in welchen die Multimediadaten beispielsweise aus relativ kurzen, abgeschlossenen Bild-, Ton- und/oder Text-Dateien bestehen. Diese können beispielsweise im Rahmen eines sogenannten "Broadcast-Dienstes" in regelmäßig wiederkehrenden Zeitabständen wiederholt werden. Dies kann beispielsweise ein Nachrichtendienst sein, bei welchem z.B. ein fester Nachrichtenblock so lange wiederholt wird, bis neue Nachrichten vorliegen.

Ein Multimediadatendienst zum Versenden von Multimediadaten, beispielsweise die genannten ersten und zweiten Multimediadaten, kann z.B. als so genannter "Broadcast-Datendienst" ausgebildet sein. Innerhalb eines solchen Datendienstes werden Daten in einem bestimmten regionalen Bereich, beispielsweise einem Land oder einem Teil eines Landes ausgesendet. Dies kann weiterhin beispielsweise unabhängig davon geschehen, ob tatsächlich Empfänger diesen Datendienst empfangen oder dafür angemeldet sind.

Ein Multimediadatendienst kann weiterhin als so genannter "Multicast-Datendienst" ausgebildet sein. Im Rahmen eines solchen Dienstes können Multimediadaten zu mehreren, gesondert angemeldete Empfänger gesendet werden. Der Dienstleister eines solchen Datendienst kennt also die Empfänger und versendet die Information nur in Bereiche, in welchen anmeldete Empfänger anwesend sind. Dies kann beispielsweise in einem Mobilfunknetz derart ausgebildet sein, dass die Multimediadaten nur in Zellen ausgesendet werden, in welchen angemeldete Empfänger anwesend sind, die den Empfang des "Multicast-" Dienstes bestellt haben.

Sowohl Multicast- als auch Broadcast-Datendienste sind dafür eingerichtet, dass im allgemeinen mehrere Empfänger einen Multimediadatenstrom lesen.

Die gesendeten Multimediadaten können beispielsweise auch als sogenannte "Streaming-Daten" ausgebildet sein, bei welchen bereits vor der vollständigen Übertragung der Multimediadaten die Ausgabe der Daten über eine entsprechende Ausgabeeinheit eines Empfängers ausgegeben werden, beispielsweise über eine Anzeigeeinheit und/oder ein Lautsprecher.

Weiterhin kann vorgesehen sein, dass mittels der ersten und zweiten Nutzungsinformation oder der gemeinsamen Nutzungsinformation angegeben wird oder angebbar ist, dass die ersten und zweiten Multimediadaten zu einer Gruppe einander jeweils zugeordneter Multimediadaten gehören. Eine solche Gruppe ein-ander jeweils zugeordneter Multimediadaten können beispielsweise Bild- und Ton-Daten sein, die zu einer Videoübertragung gehören. Eine Gruppe kann beispielsweise auch einen oder mehrere Bildkanäle und/oder einen oder mehrere Tonkanäle umfassen. Dabei kann z.B. vorgesehen sein, dass parallel die Bilddaten in verschiedenen Bildformaten geschickt werden und die Tondaten beispielsweise in verschiedenen Tondatenformaten und/oder Sprachen. In einem solchen Fall kann der Empfänger beispielsweise aus der angebotenen Vielfalt der Multimediadaten diejenigen heraussuchen, die den Vorstellungen eines Benutzers oder den technischen Möglichkeiten des Empfängers entsprechen.

Die Gruppe der einander jeweils zugeordneten Multimediadaten kann beispielsweise nur die ersten und zweiten Multimediadaten oder auch unter anderem die ersten und zweiten Multimediadaten umfassen. Eine gemeinsame Nutzungsinformation kann beispielsweise eine unabhängig von den Multimediadaten an den Empfänger gesendete Nachricht mit der Beschreibung des Inhalts der Gruppe der Multimediadaten, beispielsweise der Name eines Films oder eines Nachrichtendienstes (z.B. Sportnachrichten, aktuelle Nachrichten,...) sowie einer Beschreibung der Multimediadaten, die von der Gruppe umfasst sind, umfassen. Die einzelnen Multimediadaten; beispielsweise die ersten und zweiten Multimediadaten, können dabei z.B. durch eine spezielle Kennnummer bezeichnet sein, an welcher der Empfänger später beispielsweise die jeweiligen Multimediadaten identifizieren kann. Weiterhin können beispielsweise in einer ersten Nutzungsinformation, die den ersten Multimediadaten zugeordnet ist, eine Beschreibung der ersten Multimediadaten und/oder weiterhin Kennnummern von zweiten oder anderen Multimediadaten enthalten, welche weitere zu einer Gruppe zugehörige Multimediadaten identifizieren.

Das genannte Verfahren kann beispielsweise so ausgebildet sein, dass in dem Fall, dass die ersten und zweiten Multimediadaten zu einer Gruppe einander zugeordneter Multimediadaten gehören, diese nur dann empfangen und/oder verarbeitet werden, wenn der Empfänger auch In der Lage ist diese auch parallel zu empfangen und/oder zu verarbeiten. Dies kann beispielsweise in Fällen vorgesehen sein, in welchen die ersten und zweiten Multimediadaten zu einem Datendienst zusammen gehören wie beispielsweise bei einem Bild- und einem Tonkanal eines Films oder einer Nachricht. Ist der Empfänger nicht in der Lage, beide darzustellen oder zu decodieren, wird er in diesem Fall keine der beiden empfangen und/oder verarbeiten. Damit können dann z.B. Ressourcen gespart und der Batterieverbrauch gesenkt werden.

Der Empfänger kann dann weiterhin eine Nachricht an den Sender schicken, dass er nicht in der Lage war oder sein wird, die gesendeten Daten wie gesehen zu empfangen. Daraufhin kann der Sender beispielsweise die Daten entweder erneut senden, sie unter Umständen in einem anderen Datenformat oder mit einer anderen Qualität schicken oder dafür sorgen, dass dem Empfänger gegebenenfalls keine oder reduzierte Kosten für den Multimediadatendienst berechnet werden.

Das Verfahren kann auch so eingerichtet sein, dass der Empfänger in dem Fall, dass die ersten und zweiten Multimediadaten nicht zu einer Gruppe einander zugeordneter Multimediadaten gehören, die ersten Multimediadaten unabhängig davon empfängt und/oder verarbeitet, ob der Empfänger in der Lage ist, die zweiten Multimediadaten parallel zu empfangen und/oder zu verarbeiten.

So kann es beispielsweise im Falle von zwei unabhängigen, innerhalb von zwei Nachrichtendiensten gesendeten Multimediadaten für einen Benutzer unerheblich sein, ob er beide Nachrichtendienste parallel empfangen und/oder verarbeiten bzw. darstellen kann oder nicht. Daher ist der Benutzer-Nutzen zumindest teilweise erreicht, wenn der Empfänger, der nicht beide Datenströme parallel empfangen und/oder verarbeiten kann, nur einen davon empfängt und/oder verarbeitet bzw. darstellt.

In einer weiteren Ausgestaltung des Verfahrens kann der Empfänger derart eingerichtet oder einrichtbar sein, dass er abhängig von der ersten oder zweiten Nutzungsinformation und/oder der gemeinsamen Nutzungsinformation die ersten und zweiten Multimediadaten nur dann empfängt und/oder verarbeitet, wenn der Empfänger auch in der Lage ist, diese parallel zu empfangen und/oder zu verarbeiten. So kann in den genannten Nutzungsinformationen beispielsweise eine Information enthalten sein, dass die ersten und zweiten Multimediadaten nur parallel oder gar nicht empfangen und/oder verarbeitet werden sollen. Diese Nutzungsinformation kann beispielsweise durch den Sender oder auch durch den Empfänger den Multimediadaten zugeordnet werden.

Weiterhin kann der Empfänger auch derart eingerichtet oder einrichtbar sein, dass er abhängig von der ersten und zweiten Nutzungsinformation und/oder der gemeinsamen Nutzungsinformation die ersten Multimediadaten empfängt und/oder verarbeitet, unabhängig davon, ob parallel auch die zweiten Multimediadaten empfangbar und/oder verarbeitbar sind. In diesem Fall kann dem Empfänger durch die Nutzungsinformation beispielsweise bekannt sein, dass die ersten und zweiten Multimediadaten nicht zu einer gemeinsamen Gruppe von Multimediadaten gehören. Weiterhin kann dem Empfänger aus den genannten Nutzungsinformationen keine Informationen bekannt ist, nach welcher die ersten und zweiten Multimediadaten entweder gemeinsam oder gar nicht empfangen und/oder verarbeitet werden sollen oder können. Außerdem können die genannten Nutzungsinformationen auch eine Information umfassen, dass die ersten Multimediadaten unabhängig von anderen Multimediadaten, beispielsweise den zweiten Multimediadaten, empfangen und/oder verarbeitet werden können oder sollen. Eine vergleichbare Information kann auch zu den zweiten Multimediadaten vorliegen.

In einer weiteren Ausgestaltung des Verfahrens kann den ersten und zweiten Multimediadaten jeweils eine erste und eine zweite Priorität zugeordnet sein. Die den jeweiligen Multimediadaten zugeordnete Priorität kann dabei eine relative Wichtigkeit der Multimediadaten angeben. So kann eine höhere Priorität beispielsweise wichtigere Daten und eine niedrigere Priorität unwichtigere Daten charakterisieren. Die jeweiligen Prioritäten können die Multimediadaten beispielsweise durch den Empfänger und/oder den Sender zugeordnet werden. Multimediadaten mit höherer Priorität können beispielsweise aktuelle Nachrichten oder aktuell angeforderte Informationen sein, während Multimediadaten niedrigerer Priorität beispielsweise nicht zeitkritische Hintergrundinformationen oder ähnliches sein können. Die Information über eine Priorität von Multimediadaten kann beispielsweise in den den Multimediadaten zugeordneten Nutzungsinformationen oder der gemeinsamen Nutzungsinformation enthalten sein. Weiterhin kann die Priorität den Multimediadaten auch auf andere Weise zugeordnet werden und auch unabhängig von den Nutzungsinformationen gespeichert werden oder gespeichert sein.

Weiterhin kann das Verfahren derart ausgebildet sein, dass in dem Fall, in welchem die Multimediadaten von dem Empfänger nicht zeitgleich empfangbar und/oder verarbeitbar sind und die ersten und zweiten Multimediadaten zudem unterschiedliche Prioritäten aufweisen, bevorzugt diejenigen der Multimediadaten der ersten und zweiten Multimediadaten empfangen werden, welche die höhere Priorität aufweisen. Die Zuweisung einer Priorität kann beispielsweise über von einem Diensteanbieter oder einem Nutzer vorgenommene Einstellung geschehen.

Das vorstehend beschriebene Verfahren kann auch so ausgestaltet sein, dass in dem Fall, in welchem die ersten und zweiten Multimediadaten die gleiche Priorität aufweisen, die ersten und zweiten Multimediadaten nur dann empfangen und/oder verarbeitet werden, wenn der Empfänger auch in der Lage ist, die ersten und zweiten Multimediadaten parallel zu empfangen und/oder zu verarbeiten. Die Zuweisung gleicher Prioritäten zur Multimediadaten kann beispielsweise auch als Zuordnung der Multimediadaten zu einer Gruppe von Multimediadaten verwendet werden oder zumindest als solche verstanden werden. Es ist ein Vorteil dieser beschriebenen Ausgestaltung, dass ein Benutzer relativ sicher sein kann, dass er Daten einer bestimmen Priorität erhält und dass er bei der Übertragung von mehreren Multimediadaten mit gleicher Priorität entweder alle der Daten oder keine davon geliefert bekommt. Dies kann ihm dann beispielsweise zusätzlich durch die Ausgabe einer entsprechenden Störungsnachricht mitgeteilt werden. Eine Störungsnachricht kann im Falle des Nichtempfangs und/oder der Nichtverarbeitung der Multimediadaten auch zurück an den Sender gesendet werden. Der Sender kann dann beispielsweise mittels etwaigem erneuten Senden oder einer entsprechenden Vergebührungsinformation auf die Störungsnachricht reagieren.

Weiterhin kann vorgesehen sein, dass nach einer Beendigung des Empfangs der ersten Multimediadaten die zweiten Multimediadaten empfangen werden, wenn diese noch nicht parallel zu den ersten Multimediadaten empfangen wurden. Dies kann insbesondere dann der Fall sein, wenn zumindest die zweiten Multimediadaten wiederholt gesendet werden, so dass der Empfänger nach dem Empfang der ersten Multimediadatenerneut die Möglichkeit hat, die zweiten Multimediadaten zu empfangen.

Weiterhin kann vorgesehen sein, dass die ersten und zweiten Multimediadaten parallel über mindestens eine Ausgabeeinheit des Empfängers ausgegeben werden. Dies kann z.B. bei einer Gruppe von jeweils einander zugeordneten Multimediadaten vorteilhaft sein, da es für das Verständnis der Multimediadaten durch einen Benutzer relevant sein kann. So ist es beispielsweise sinnvoll, bei einem Film mit getrenntem Bild- und Tonkanal, die der jeweiligen Bildinformation entsprechende Toninformation parallel zur Display- bzw. Lautsprechereinheit des Empfängers zu geben. Das Weiterleiten von Multimediadaten zu einer oder mehreren entsprechenden Ausgabeeinheiten des Empfängers kann zu Beispiel über eine MultimediaSteuerungseinheit im Empfänger (z.B. ein sogenannter. "MBMS-Client") geschehen, bei welchem die Daten auch partiell oder auch insgesamt gespeichert oder zwischengespeichert werden können.

In einer vorteilhaften Ausgestaltung kann der Empfänger als mobiles Kommunikationsendgerät ausgebildet sein, beispielsweise nach dem GSM/GPRS dem UMTS und/oder dem CDMA 2000 Standard. Das vorstehende Verfahren eignet sich sehr gut für mobile Kommunikationsendgeräte, da das beschriebene Verfahren sich z.B. gut für eine Verwendung im Rahmen eines Multimedia Broadcast/Multicast Service (MBMS) eignet.

Die erste und zweite Nutzungsinformation, die gemeinsame Nutzungsinformation und/oder die erste und/oder zweite Priorität kann die den Multimediadaten beispielsweise durch eine Multimedia-Steuerungsstelle zugeordnet sein. Diese Multimedia-Steuerungsstelle kann beispielsweise vom Sender umfasst werden oder auch eine gesonderte an ein Telekommunikationsnetz angebundene Einheit (z.B. eine Netzwerk-Steuerungseinheit (z.B. Radio-Network-Controller (RNC) gemäß dem UMTS Mobilfunkstandard oder vergleichbare Einheiten in anderen Mobilfunknetzen)) sein. Die Multimediasteuerungsstelle kann beispielsweise als ein "Broadcast-Multicast-Service-Center (BM-SC)" ausgebildet sein, wie es im Rahmen des 3GPP Standards TS 23.246 V6.6.0 Kap. 5.1 für MBMS beschrieben ist.

Wie vorstehend teilweise bereits erwähnt kann eine Störungs-nachricht vom Empfänger an den Sender gesendet werden, wenn der Empfänger die ersten und/oder zweiten Multimediadaten nicht empfangen und/oder verarbeiten kann. In diesem Fall kann der Sender beispielsweise die jeweils nicht empfangenen und/oder gesendeten Daten erneut senden, beispielsweise unverändert in einem anderen Format und/oder in einer anderen Qualität. Auch diese Zusatzinformation kann beispielsweise in der Störungsnachricht enthalten sein. Auf diese Weise besteht eine erhöhte Wahrscheinlichkeit, dass der Empfänger die nicht empfangenen Multimediadaten dann doch noch empfangen kann. Weiterhin kann eine solche Störungsnachricht auch bei der Vergebührung der Multimediadaten verwendet werden, indem beispielsweise keine oder verringerte Gebühren für nicht empfangene und/oder verarbeitete Multimediadaten erhaben werden. Der Sender kann beispielsweise eine entsprechende Vergebührungsnachricht initiierten. Weiterhin kann der Sender die Vergebührung auch selber vornehmen.

Weiterhin wird die vorstehen genannte Aufgabe auch durch einen Sender gelöst, der Mittel zur Durchführung des vorstehend beschriebenen Verfahrens aufweist. Die Aufgabe wird auch gelöst von einem Empfänger zum Empfang der ersten und zweiten Multimediadaten, welcher Mittel zur Durchführung des vorstehend genannten Verfahrens nachweist.

Weitere vorteilhafte Ausgestaltungen finden sich in den Unteransprüchen.

Im Folgenden wird die Erfindung beispielhaft mit Bezug auf die beiliegenden Figuren erläutert. Er zeigen:
Figur 1:
   Beispiel für ein Mobilfunksystem;
Figur 2:
   Nachrichtenschema beim parallelen Empfang von Multimediadaten;
Figur 3:
   Nachrichtenschema, wenn ein paralleler Empfang von Multimediadaten nicht möglich ist;
Figur 4:
   Nachrichtenschema beim sequentiellen Empfang von Multimediadaten.

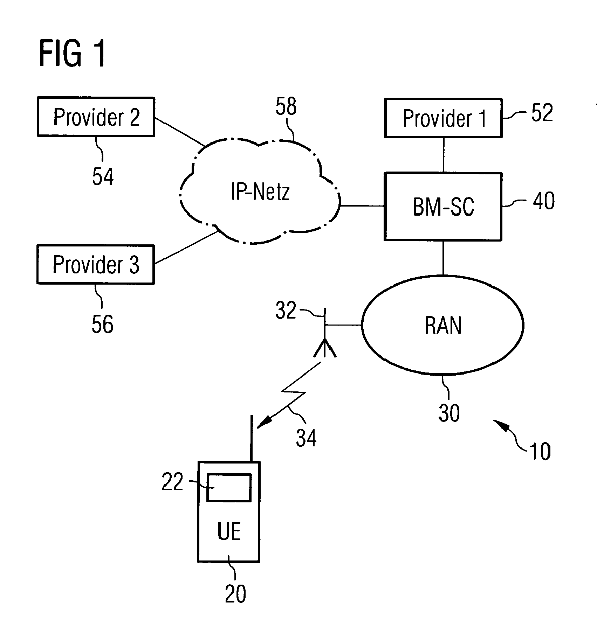

Figur 1 zeigt ein Mobilfunksystem 10. Dabei empfängt ein Mobilfunkendgerät 20 welches eine Anzeigeeinrichtung 22 aufweist, ein Funksignal 34 von einer Basisstation 32 eines Funkzugangsnetzwerks 30 (in Abbildung 1 auch als RAN bezeichnet; RAN = Radio Access Network). Mit dem Radio Access Network verbunden ist eine Multimediasteuerungsstelle 40, in Figur 1 als BM-SC bezeichnet. Die Multimediasteuerrungsstelle 40 ist wiederum mit einem ersten Multimediadienstleister 52 verbunden, der in Figur 1 als "Provider 1" bezeichnet wird. Zwei weitere Multimediadienstleister 54 und 56 (in Figur 1 als "Provider 2 und 3" bezeichnet) sind mit der Multimedia-steuerungsstelle 40 über ein Kommunikationsnetzwerk 58, welches beispielsweise als IP-Netzwerk ausgebildet sein kann, verbunden.

Von den Multimediadienstleistern 52, 54, 56, zur Verfügung gestellte Multimediadaten werden in der Multimediasteuerungsstelle 40 zu Multimediadiensten aufbereitet. Die verfügbaren Multimediadienste werden dann vom Multimediasteuerungszentrum 40 über das Funkzugangsnetzwerk 30 an das Endgerät 20 signalisiert. Ein Benutzer des Endgeräts 20 kann dann ein oder mehrere der Multimediadienste bestellen und eine entsprechende Nachricht an die Multimediasteuerungsstelle 40 zurücksenden. Die entsprechenden Multimediadaten werden dann beispielsweise sofort oder auch später von der Multimediasteuerungsstelle 40 an das Endgerät 20 im Rahmen des Multimediadatendienstes übertragen.

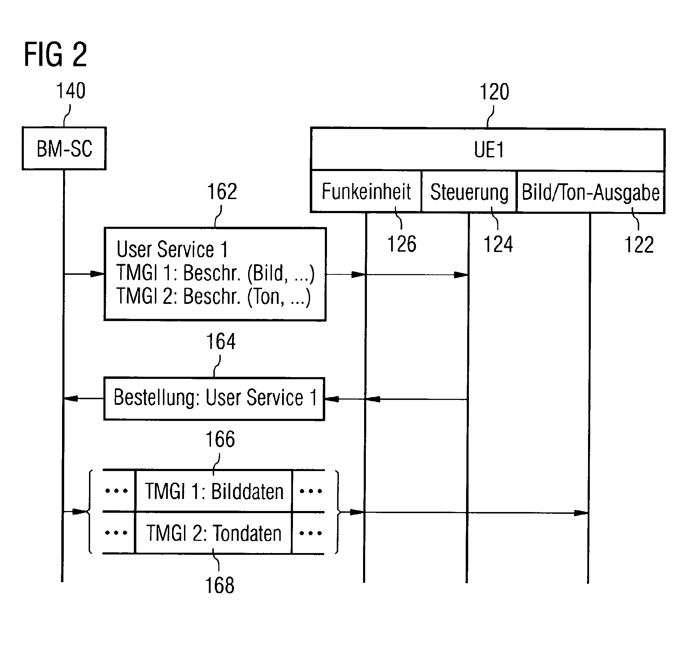

Figur 2 zeigt einen beispielhaften Nachrichtenverlauf beim Übertragen einer Gruppe von Multimediadaten, die aus zwei Multimediadaten zusammengesetzt ist. Die Nachrichten werden zwischen einer Multimediasteuerungsstelle 140 und einem ersten Endgerät (UE1) 120 ausgetauscht. Das erste Endgerät 120 umfasst eine Funkeinheit 126 zur Basisbandverarbeitung, eine Steuerungseinheit 124 zur Steuerung des Empfangs von Multimediadaten und eine Ausgabeeinheit 122 zur Ausgabe von Bild-und Tondaten, die sich beispielsweise aus einer Anzeigeeinheit und einem Lautsprecher zusammensetzt.

Zur Ankündigung eines Multimediadatendiensts wird eine Ankündigungsnachricht 162 ("Ueer Service I") an die Funkeinheit 126 des ersten Endgerätes 120 geschickt und von diesem an die Steuerungseinheit 124 des Endgeräts 120 weitergeleitet. Die Ankündigungsnachricht enthält Kennnummern (TMGI1 und TMGI2) (TMGI: "Temporary Mobile Group Identity") für zwei Unter-Multimediadatendienste, aus welchen sich der Multimediadatendienst "User Service 1" zusammensetzt. Weiterhin enthält die Ankündigungsnachricht 162 auch Informationen über den Inhalt des Datendienstes sowie der Unterdatendienste TMGI1 und TMGI2.

Nach der Auswahl des Datendienstes durch einen Benutzer wird eine Bestell-Nachricht 164 von der Steuerungseinheit 124 des ersten Endgeräts 120 über die Funkeinheit 126 des Endgeräts an die Multimediasteuerungsstelle 140 im Kommunikationsnetz gesendet. Daraufhin werden parallel die Unterdatendienste TMGI1 und TMGI2 in Nachrichten 166 und 168 von der Multimediasteuerungsstelle 140 im Telekommunikationsnetz an den ersten Empfänger 120 gesendet. Im vorliegenden Beispiel sind die Daten als sog. Streaming-Daten ausgebildet, d.h. es handelt sich um einen aus vielen Datenpaketen zusammen gesetzten Datenstrom, wobei die Daten jeweils direkt nach dem Empfang angezeigt werden, bevor der Empfang der gesamten Daten und/oder des enstsprechenden gesamten "user service" beendet ist. Dies ist in Figur 2 durch Punkte links und rechts von den Nachrichten 166 und 168 dargestellt.

Der erste Empfänger 120 ist nun so konfiguriert, dass Datenströme, welche zu einer Gruppe von Multimediadaten gehören nur dann empfangen und verarbeitet werden, wenn diese auch parallel empfangbar und verarbeitbar sind. Im vorliegenden Fall ergibt die Überprüfung der in der Ankündigungsnachricht 162 übersendeten Daten anhand der Fähigkeiten des Endgeräts, dass ein paralleler Empfang von TMGI1 und TMGI2 möglich ist. Daher werden die ersten Multimediadaten TMGI1 166 und die zweiten Multimediadaten TMGI2 168 parallel von der Funkeinheit 126 des ersten Endgeräts 120 empfangen und an die Ausgabeeinheit 122 des Endgeräts weitergeleitet. Im vorliegenden Beispiel sind die ersten Multimediadaten als Bilddaten und die zweiten Multimediadaten als dazu gehörende Tondaten ausgebildet.

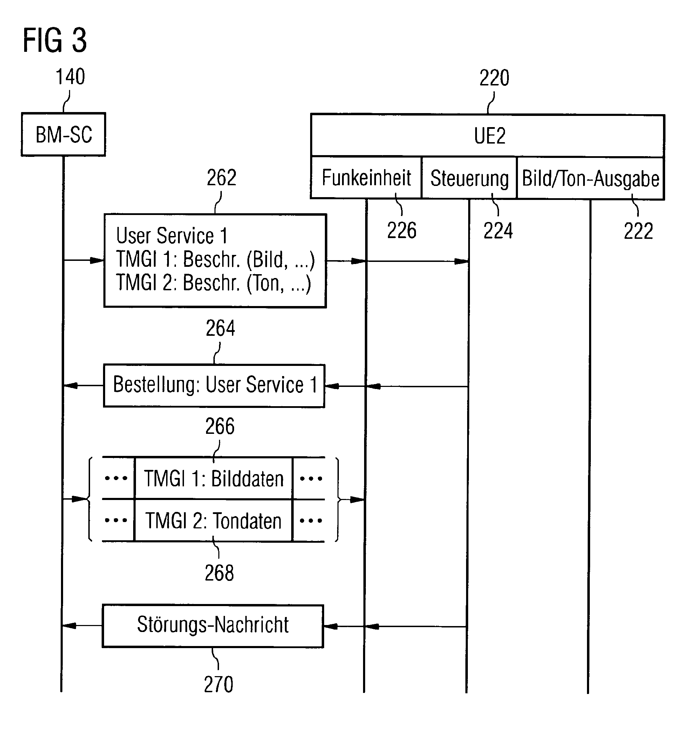

Figur 3 stellt einen der Figur 2 vergleichbaren Nachrichtenstrom dar, wobei ein zweites Endgerät 220 Verwendung findet, welches keinen parallelen Empfang von Bild und Tondaten ermöglicht. Dabei entsprechen die in Figur 3 mit 200-er Zahlen bezeichneten Nachrichten und Empfängefeinheiten den entsprechenden mit 100-er Zahlen bezeichneten Einheiten und Nachrichten in Figur 2.

Die Multimediasteuerstelle 140 sendet wiederum eine Ankündj.-gungsnachricht 262 an eine Funkeinheit 226 des zweiten Endgerätes 220, welche an die entsprechende Steuerungseinheit 224 des Endgeräts weitergeleitet wird. Nach Annahme der Nachricht wird eine Bestellungsnachricht des Multimediadienstes 264 von der Steuerungsstelle 224 des Endgeräts 220 über die Funkeinheit 226 an das Multimediazentrum 140 im Telekommunikationsnetz gesendet. Dieses sendet wiederum die ersten Multimediadaten TMGI1 266 und parallel dazu die zweiten Multimediadaten TMGI2 268 an das zweite Endgerät 220. Da diese aus den genannten technischen Gründen, wie vorstehend erwähnt, vom zweiten Endgerät 220 nicht parallel empfangen werden können und das zweite Endgerät 220 wie das erste Endgerät 120 so eingestellt ist, dass zu einer Gruppe von Multimediadaten gehörende Multimediadaten nur dann empfangen werden, wenn alle zusammen gehörigen Daten auch empfangbar und verarbeitbar sind, wird innerhalb der Basisbandverarbeitung der weitere Empfang und die Weiterverarbeitung der ersten und zweiten Multimediadaten TMGI1 und TMGI2 gestoppt. Danach wird von der Steuerungseinheit 224 des zweiten Endgeräts 220 eine Störungsnachricht 270 über die Funkeinheit 226 des zweiten Endgeräts an die Multimediasteuerungsstelle 140 im Telekommunikationsnetz gesendet. Diese veranlasst daraufhin, dass dem Empfänger die gesendeten Multimediadaten TMGI1 und TMGI2 nicht in Rechnung gestellt werden.

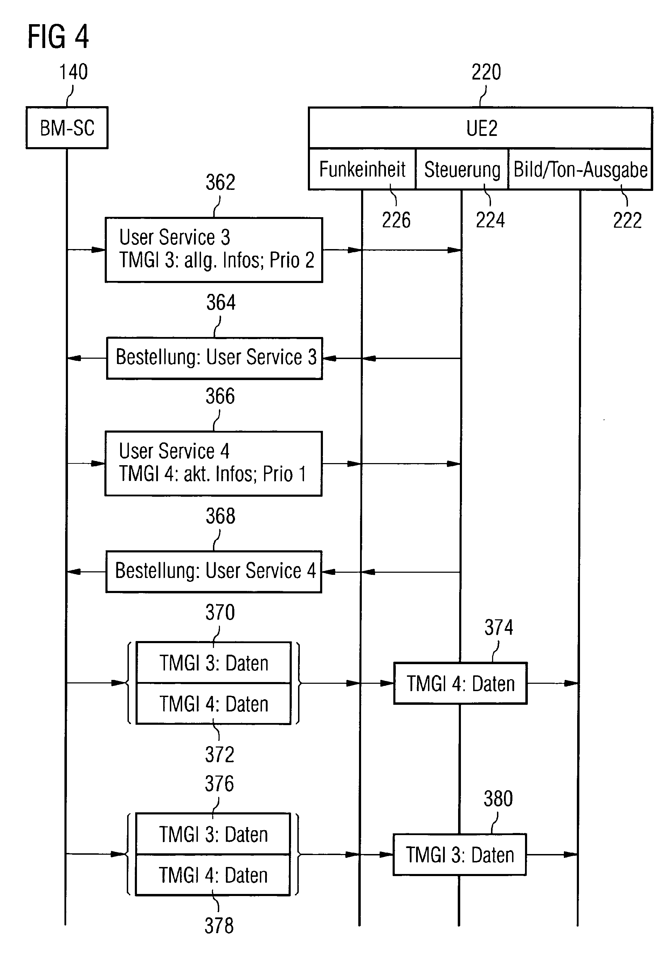

Figur 4 stellt ein weiteres Beispiel für einen Nachrichtenverlauf bei der zur Verfügungsstellung von zwei Multimediadiensten an das zweite Endgerät 220 dar. Dabei wurde das zweite Endgerät 220 bereits im Rahmen von Figur 3 erläutert.

In diesem Beispiel sendet die Multimediasteuerungseinheit 140 im Telekommunikationsnetz eine Multimediaankündigungsnachricht 362 an das zweite Endgerät 220. Dieses beschreibt einen dritten Multimediadienst der nur einen Unterdienst TMGI3 aufweist. Dieser hat allgemeine Informationen zum Inhalt und eine niedrige Priorität 2. TMGI3 ist wie in den vorgenannten Fällen eine Kennnummer für den entsprechenden MultimediaDatendienst. Diese Ankündigungsnachricht 362 wird von der Funkeinheit 226 des zweiten Endgeräts 220 empfangen und an die Steuerungsstelle 224 in diesem Endgerät weitergeleitet. Eine durch den Benutzer ausgelöste Bestellnachricht 364 für diesen Multimediadatendienst TMGI3 wird von der Steuerungsstelle 224 des zweiten Endgeräts 220 über die Funkeinheit 226 des Geräts an die Multimediasteuerstelle 140 weitergeleitet. Weiterhin wird von der Multimediasteuerstelle 140 ein vierter Multimediadatendienst ("User Service 4") mit einer Kennnummer TMGI4 366 an das zweite Endgerät 220 entsprechend der Nachricht 362 übertragen. Auch hier reagiert der Benutzer mit einer Bestellnachricht 368 die analog der Bestellungsnachricht 364 gesendet wird.

Die Multimediasteuerungsstelle 140 sendet nun die Daten sowohl zum dritten als auch zum vierten Multimediadienst TMGI3 und TMGI4 parallel in Datenpaketen 370 und 372. Das zweite Endgerät ist weiterhin derart eingerichtet, dass es bei parallel ankommenden Multimediadatendiensten, die nicht zu einer gemeinsamen Gruppe von Multimediadatendiensten gehören, diejenigen Daten bevorzugt empfängt, welche eine höhere Priorität aufweisen. Dies sind im vorliegenden Fall die vierten Multimediadaten TMGI4 366 mit der höheren Priorität 1. Da aufgrund der technischen Eigenschaften des zweiten Empfängers 220 dieser nicht beide Multimediadatenströme 370 und 372 parallel empfangen kann, werden nur die vierten Multimediadaten 372 empfangen und nach interner Verarbeitung als Datenstrom 374 an die Ausgabeeinheit 222 des zweiten Endgeräts 220 weitergeleitet.

Das Multimediasteuerungszentrum 140 ist weiterhin so eingerichtet, dass es die zu den dritten und vierten Datendiensten gehörenden Daten mehrfach hintereinander aussendet, um beispielsweise erst später eingeschalteten Endgeräten ebenfalls Zugang zu diesen Daten zu ermöglichen. Daher sendet das Multimediasteuerungszentrum 140 die dritten und vierten Multimediadaten TMGI3 und TMGI4 in den Datenpaketen 376 und 378 dann erneut. Da das zweite Endgerät die vierten Multimediadaten mit der höheren Priorität bereits empfangen hat, empfängt dieses nun bei der wiederholten Übertragung der Multimediadaten die dritten Multimediadaten TMGI3. Diese werden wiederum von der Funkeinheit 226 des zweiten Empfängers 220 empfangen, verarbeitet und als verarbeitete Daten 380 an die Ausgabeeinheit 222 des zweiten Endgeräts übertragen.

Die vorliegende Erfindung beschreibt ein effizientes Verfahren zum Handling von parallel an einen Empfänger gesendeten Multimediadaten in Abhängigkeit vom Inhalt und der Priorisierung der Multimediadaten und den technischen Möglichkeiten des Empfängers.

## Patentansprüche

1. Verfahren zur Verarbeitung von Multimediadaten, wobei erste und zweite Multimediadaten (166, 168, 266, 268, 370, 372, 374, 376, 378, 380) zumindest teilweise zeitgleich von einem Sender (40, 140) an einen Empfänger (20, 120, 220) gesendet werden,
**dadurch gekennzeichnet,**
**dass**
- den ersten und zweiten Multimediadaten (166, 168, 266, 268, 370, 372, 374, 376, 378, 380) jeweils eine erste und zweite Nutzungsinformation (362, 366) und/oder eine gemeinsame Nutzungsinformation (162, 262) zugeordnet ist,
- und der Empfänger (20, 120, 220) die ersten und zweiten Multimediadaten (166, 168, 266, 268, 370, 372, 374, 376, 378, 380) in Abhängigkeit von der ersten und zweiten Nutzungsinformation (362, 366) und/oder der gemeinsamen Nutzungsinformation (162, 262) verarbeitet und/oder empfängt.

2. Verfahren nach Anspruch 1,
**dadurch gekennzeichnet,**
**dass** nach einer Beendigung der Übertragung der ersten und/oder zweiten Multimediadaten (166, 168, 266, 268, 370, 372, 374, 376, 378, 380) diese jeweils erneut übertragen werden.

3. Verfahren nach Anspruch 1 oder 2,
**dadurch gekennzeichnet,**
**dass** bereits vor der Beendigung der Übertragung der ersten und/oder zweiten Multimediadaten (166, 168, 266, 268, 370, 372, 374, 376, 378, 380) die ersten und/oder zweiten Multimediadaten (166, 168, 266, 268, 370, 372, 374, 376, 378, 380) vom Empfänger (20, 120, 220) ausgegeben werden.

4. Verfahren nach einem der Ansprüche 1 bis 3,
**dadurch gekennzeichnet,**
**dass** mittels der ersten und zweiten Nutzungsinformation (362, 366) und/oder der gemeinsamen Nutzungsinformation (162, 262) angegeben wird oder angebbar ist, dass die ersten und zweiten Multimediadaten (166, 168, 266, 268, 370, 372, 374, 376, 378, 380) zu einer Gruppe einander jeweils zugeordneter Multimediadaten gehören.

5. Verfahren nach Anspruch 4,
**dadurch gekennzeichnet,**
**dass** der Empfänger derart eingerichtet oder einrichtbar ist, dass bei der Zugehörigkeit der ersten und zweiten Multimediadaten (166, 168, 266, 268, 370, 372, 374, 376, 378, 380) zu der Gruppe einander zugeordneter Multimediadaten die ersten und zweiten Multimediadaten (166, 168, 266, 268, 370, 372, 374, 376, 378, 380) nur dann empfangen und/oder verarbeitet werden, wenn der Empfänger (20, 120, 220) auch in der Lage ist, diese parallel zu empfangen und/oder zu verarbeiten.

6. Verfahren nach Anspruch 4 oder 5,
**dadurch gekennzeichnet,**
**dass** der Empfänger (20, 120, 220) derart eingerichtet oder einrichtbar ist, dass wenn die ersten und zweiten Multimediadaten (166, 168, 266, 268, 370, 372, 374, 376, 378, 380) nicht zu der Gruppe einander zugeordneter Multimediadaten gehören, die ersten Multimediadaten (166, 266, 370, 376, 380) unabhängig davon empfangen und/oder verarbeitet werden, ob der Empfänger (20, 120, 220) in der Lage ist, die zweiten Multimediadaten (168, 268, 372, 374, 378) parallel zu empfangen und/oder zu verarbeiten.

7. Verfahren nach einem der Ansprüche 1 bis 6,
**dadurch gekennzeichnet,**
**dass** der Empfänger (20, 120, 220) derart eingerichtet oder einrichtbar ist, dass er abhängig von der ersten und zweiten Nutzungsinformation (362, 366) und/oder der gemeinsamen Nutzungsinformation (162, 262) die ersten und zweiten Multimediadaten (166, 168, 266, 268, 370, 372, 374, 376, 378, 380) nur dann empfängt und/oder verarbeitet, wenn der Empfänger (20, 120, 220) auch in der Lage ist, diese parallel zu empfangen und/oder zu verarbeiten.

8. Verfahren nach einem der Ansprüche 1 bis 7,
**dadurch gekennzeichnet,**
**dass** der Empfänger (20, 120, 220) derart eingerichtet oder einrichtbar ist, dass er abhängig von der ersten und zweiten Nutzungsinformation (362, 366) und/oder der gemeinsamen Nutzungsinformation (162, 262) die ersten Multimediadaten (166, 266, 370, 376, 380) empfängt und/oder verarbeitet, unabhängig davon ob parallel auch die zweiten Multimediadaten (168, 268, 372, 374, 378) empfangbar und/oder verarbeitbar sind.

9. Verfahren nach einem der Ansprüche 1 bis 8,
**dadurch gekennzeichnet ,**
**dass** den ersten und zweiten Multimediadaten (166, 168, 266, 268, 370, 372, 374, 376, 378, 380) jeweils eine erste und eine zweite Priorität zugeordnet wird.

10. Verfahren nach Anspruch 9,
**dadurch gekennzeichnet,**
**dass** bevorzugt die Multimediadaten (372, 374, 378)mit der höheren Priorität empfangen und/oder verarbeitet werden, insbesondere wenn die ersten und zweiten Multimediadaten (166, 168, 266, 268, 370, 372, 374, 376, 378, 380) nicht zeitgleich empfangbar sind.

11. Verfahren nach Anspruch 9 oder 10,
**dadurch gekennzeichnet,**
**dass** bei gleicher Priorität der ersten und zweiten Multimediadaten die Multimediadaten (166, 168, 266, 268, 370, 372, 374, 376, 378, 380) nur dann empfangen und/oder verarbeitet werden, wenn der Empfänger (20, 120, 220) in der Lage ist, die ersten und zweiten Multimediadaten (166, 168, 266, 268, 370, 372, 374, 376, 378, 380) parallel zu empfangen und/oder zu verarbeiten.

12. Verfahren nach einem der Ansprüche 9 bis 11,
**dadurch gekennzeichnet,**
**dass** die jeweils erste und zweite Priorität den ersten und zweiten Multimediadaten (166, 168, 266, 268, 370, 372, 374, 376, 378, 380) durch den Empfänger (20, 120, 220) zugeordnet wird oder zuordenbar ist.

13. Verfahren nach einem der Ansprüche 9 bis 12,
**dadurch gekennzeichnet,**
**dass** die jeweils erste und zweite Priorität den ersten und zweiten Multimediadaten (166, 168, 266, 268, 370, 372, 374, 376, 378, 380) durch den Sender (40, 140) zugeordnet wird oder zuordenbar ist.

14. Verfahren nach einem der Ansprüche 1 bis 13,
**dadurch gekennzeichnet,**
**dass** nach einer Beendigung des Empfangs der ersten Multimediadaten (166, 266, 370, 376, 380) die zweiten Multimediadaten (168, 268, 372, 374, 378) empfangen werden, wenn diese noch nicht parallel zu den ersten Multimediadaten empfangen wurden.

15. Verfahren nach einem der Ansprüche 1 bis 14,
**dadurch gekennzeichnet,**
**dass** die ersten und zweiten Multimediadaten (166, 168, 266, 268, 370, 372, 374, 376, 378, 380) parallel über mindestens eine Ausgabeeinheit (22, 122, 222) des Empfängers (20, 120, 220) ausgegeben werden.

16. Verfahren nach einem der Ansprüche 1 bis 15,
**dadurch gekennzeichnet,**
**dass** der Empfänger (20, 120, 220) als mobiles Telekommunikationsendgerät ausgebildet ist.

17. Verfahren nach einem der Ansprüche 1 bis 16,
**dadurch gekennzeichnet,**
**dass** die erste und zweite Nutzungsinformation (362, 366), die gemeinsame Nutzungsinformation (162, 262) und/oder die erste und zweite Priorität den Multimediadaten (166, 168, 266, 268, 370, 372, 374, 376, 378, 380) durch eine Multimedia-Steuerungsstelle zugeordnet wird.

18. Verfahren nach einem der Ansprüche 1 bis 17,
**dadurch gekennzeichnet,**
**dass** der Sender (40, 140) die Multimedia-Steuerungsstelle umfasst.

19. Verfahren nach einem der Ansprüche 1 bis 18,
**dadurch gekennzeichnet,**
**dass** eine Störungs-Nachricht (270) vom Empfänger (20, 120, 220) an den Sender (40, 140) gesendet wird, wenn der Empfänger (20, 120, 220) die ersten und/oder zweiten Multimediadaten (166, 168, 266, 268, 370, 372, 374, 376, 378, 380) nicht empfangen und/oder verarbeiten kann.

20. Sender (40, 140) mit Multimedia-Steuerungsstelle zum Senden von ersten und zweiten Multimediadaten (166, 168, 266, 268, 370, 372, 374, 376, 378, 380) zumindest teilweise zeitgleich an einen Empfänger (20, 120, 220),
**dadurch gekennzeichnet,**
**dass** die Multimedia-Steuerungsstelle Zuweisungsmittel umfasst, mit welchen den ersten und zweiten Multimediadaten (166, 168, 266, 268, 370, 372, 374, 376, 378, 380) eine gemeinsame Nutzungsinformation ( (162, 262) und/oder jeweils erste und zweite Nutzungsinformationen 362, 366) zuordenbar ist oder zugeordnet wird.

21. Sender nach Anspruch 20,
**dadurch gekennzeichnet,**
**dass** mittels der Zuweisungsmittel den ersten und zweiten Multimediadaten (166, 168, 266, 268, 370, 372, 374, 376, 378, 380) jeweils eine erste und eine zweite Priorität zugeordnet wird oder zuordenbar ist.

22. Sender nach Anspruch 20 oder 21,
**dadurch gekennzeichnet,**
**dass** die Multimedia-Steuerungsstelle Mittel zum Durchführen eines Verfahrens nach einem der Ansprüche 1 bis 16 umfasst.

23. Empfänger (20, 120, 220) zum Empfang ersten und zweiten Multimediadaten (166, 168, 266, 268, 370, 372, 374, 376, 378, 380), die von einem Sender (40, 140) teilweise zeitgleich gesendet werden,
**dadurch gekennzeichnet,**
**dass** den ersten und zweiten Multimediadaten jeweils eine erste und zweite Nutzungsinformation (362, 366) und/oder eine gemeinsame Nutzungsinformation (162, 262) zugeordnet ist und der Empfänger (20, 120, 220) Verarbeitungsmittel umfasst, die zum Empfangen und/oder Verarbeiten der ersten und zweiten Multimediadaten (166, 168, 266, 268, 370, 372, 374, 376, 378, 380) in Abhängigkeit von der gemeinsamen Nutzungsinformation (362, 366) und/oder der ersten und zweiten Nutzungsinformation (162, 262) ausgebildet ist.

24. Empfänger nach Anspruch 23,
**dadurch gekennzeichnet,**
**dass** die Verarbeitungsmittel derart eingerichtet oder einrichtbar sind, dass abhängig von der ersten und zweiten Nutzungsinformation (362, 366) und/oder der gemeinsamen Nutzungsinformation (162, 262) die ersten und zweiten Multimediadaten (166, 168, 266, 268, 370, 372, 374, 376, 378, 380) nur dann empfangen und/oder verarbeitet werden, wenn der Empfänger (20, 120, 220) in der Lage ist, sie parallel zu empfangen und/oder zu verarbeiten.

25. Empfänger nach Anspruch 23 oder 24,
**dadurch gekennzeichnet,**
**dass** die Verarbeitungsmittel derart eingerichtet oder einrichtbar sind, dass abhängig von der ersten und zweiten Nutzungsinformation (362, 366) oder der gemeinsamen Nutzungsinformation (162, 262) die ersten Multimediadaten (166, 266, 370, 376, 380) unabhängig davon empfangen und/oder verarbeitet werden, ob der (20, 120, 220) Empfänger in der Lage ist, die zweiten Multimediadaten (168, 268, 372, 374, 378) parallel zu empfangen und/oder zu verarbeiten.

26. Empfänger nach einem der Ansprüche 23 bis 25,
**dadurch gekennzeichnet,**
**dass** die Verarbeitungsmittel zur Durchführung eines Verfahrens nach einem der Ansprüche 1 bis 16 ausgebildet ist.
